# EUROPÄISCHE PATENTSCHRIFT

(11) **EP 0 415 271 B1**
(45) Veröffentlichungstag und Bekanntmachung des Hinweises auf die Patenterteilung: **18.11.1993**
(21) Anmeldenummer: 90116183.6
(22) Anmeldetag: 23.08.1990
(51) Int. Cl.: B23B 29/32

(54) **Werkzeugrevolver für Werkzeugmaschinen**
Tool turret for machine-tool
Revolver porte-outil pour machine-outil

(30) Priorität: 01.09.1989 DE 3929136
(43) Veröffentlichungstag der Anmeldung: 06.03.1991
(73) Patentinhaber: EMAG MASCHINENFABRIK GMBH, D-73084 Salach (DE)
(72) Erfinder: Schmidt, Rudolf, D-7313 Reichenbach /Fils (DE)
(74) Vertreter: Zmyj, Erwin, Dipl.-Ing., Dipl.-Wirtsch.-Ing.

(56) Entgegenhaltungen:
- EP-A- 0 214 090
- CH-A- 586 092
- DD-A- 250 481
- DE-C- 3 730 561
- GB-A- 2 126 134

## Beschreibung

Die Erfindung bezieht sich auf einen Werkzeugrevolver für Werkzeugmaschinen mit angetriebenen Werkzeugen, dessen Revolverscheibe an einer im Revolvergehäuse drehbar gelagerten Revolverwelle angeordnet, in verschiedene Drehwinkellagen bringbar und festlegbar ist, in denen das jeweilige Werkzeug mit einer Antriebswelle gekuppelt ist, wobei am Revolvergehäuse an der der Revolverscheibe abgewandten Seite ein von einem Motor antreibbares Getriebe vorgesehen ist, das ein koaxial zur Revolverwelle drehbar gelagertes Zahnrad aufweist, das einerseits mit der Revolverwelle durch eine schaltbare Kupplung drehfest verbindbar ist und andererseits mittels eines nachgeordneten, das Werkzeug antreibenden Zwischenzahnrades mit einem Ritzel der Antriebswelle für die Werkzeuge in verbindbar ist.

Bei einem bekannten Werkzeugrevolver dieser Art (DE-PS 37 30 561) ist zwar die Möglichkeit vorgesehen, ausgehend von einem Motor wahlweise die Revolverscheibe oder das Werkzeug anzutreiben, jedoch besteht keine Möglichkeit die Werkzeuge mit unterschiedlich hoher Drehzahl anzutreiben. Diese Möglichkeit ist zwar bei einem weiteren Werkzeugrevolver (DE-OS 16 02 902) grundsätzlich gegeben, doch sind hierfür getrennte Antriebsmotoren und getrennte Getriebezüge notwendig, die den konstruktiven Aufwand und den Platzbedarf erhöhen.

Aufgabe der Erfindung ist es, einen Werkzeugrevolver der eingangs erläuterten Art so zu gestalten, daß mit ein und demselben herkömmlichen Antriebsmotor des Werkzeugrevolvers sowohl die Revolverscheibe geschwenkt als auch die Werkzeuge angetrieben werden können, wobei für das Schwenken der Revolverscheibe ein hohes Drehmoment und für den Antrieb der Werkzeuge verschieden hohe Drehzahlen zur Verfügung stehen.

Diese Aufgabe wird ausgehend von einem Werkzeugrevolver nach dem Oberbegriff des Anspruchs 1, erfindungsgemäß dadurch gelöst, daß für das Antreiben der Antriebswelle (28) mit unterschiedlichen Drehzahlen das Getriebe zwei parallel verlaufende, vom Motor ständig angetriebene Getriebezüge aufweist, daß das Zwischenzahnrad schaltbar ist und daß die Antriebswelle mittels des schaltbaren Zwischenrades wahlweise mit einem der Getriebezüge kuppelbar ist.

Durch diese Ausgestaltung ist es nicht nur möglich die Revolverscheibe mit einer niedrigen Drehzahl und hohem Drehmoment und die Werkzeuge mit einer wesentlich höheren Drehzahl anzutreiben, sondern die Werkzeuge können mit unterschiedlich hohen Drehzahlen angetrieben werden, weil die Zahnräder der beiden vom Motor ständig angetriebenen Getriebezüge entsprechend den gewünschten Drehzahlen unterschiedlich bemessen werden können. Durch die Verwendung eines einzigen Motors, der beide Getriebezüge ständig antreibt, ist der Platzbedarf gering.

Eine besonders vorteilhafte Ausgestaltung der Erfindung ergibt sich dadurch, daß die Revolverwelle axial verschiebbar gelagert ist und mittels eines auf ihr befestigten doppelt wirkenden Kolbens in zwei Endstellungen verschiebbar ist, daß an der aus Revolverwelle und Revolverscheibe bestehenden Einheit der eine Teil einer Hirth-Kupplung fest angeordnet ist, deren anderer Teil am Revolvergehäuse befestigt ist, daß auf der Revolverwelle ein Zahnrad mit Außenverzahnung und ein dazupassendes Zahnrad mit Innenverzahnung am kooaxialen Zahnrad des Getriebes befestigt ist, wobei das Zahnrad auf der Revolverwelle und das Zahnrad am koaxialen Zahnrad die schaltbare Kupplung bilden, daß bei der axialen Verschiebung der Revolverwelle in die erste Endstellung die beiden Zahnräder der schaltbaren Kupplung in Eingriff und die beiden Teile der Hirth-Kupplung außer Eingriff kommen und bei der Verschiebung in die zweite Endstellung die Zahnräder der schaltbaren Kupplung außer Eingriff und die Teile der Hirth-Kupplung in Eingriff kommen und daß das schaltbare Zwischenrad durch eine Schalteinrichtung außer Eingriff mit dem koaxialen Zahnrad bringbar ist, wenn sich die Revolverwelle in der ersten Endstellung befindet und in Eingriff mit dem koaxialen Zahnrad bringbar ist, wenn sich die Revolverwelle in der zweiten Endstellung befindet.

Durch die axiale Verschiebbarkeit der Revolverwelle ist es mit nur einem einzigen doppelt wirkenden Kolben möglich, einerseits die Teile der Hirth-Kupplung in Eingriff zu bringen, um die Revolverscheibe in einer bestimmten Drehwinkellage festzulegen und gleichzeitig den Kraftfluß vom Antriebsmotor zur Revolverwelle aufzuheben und andererseits beim Ankuppeln der Revolverwelle an das Getriebe die Hirth-Kupplung zu lösen. Besonders vorteilhaft ist hierbei, daß das Trennen der Hirth-Kupplung und das Ankuppeln der Revolverwelle an das Getriebe zwangsweise gleichzeitig erfolgt, weil beide Kupplungen mit der Revolverwelle in Verbindung stehen und die Betätigung dieser Kupplungen von der Axialverschiebung der Revolverwelle abhängt, so daß sichergestellt ist, daß die Revolverwelle nicht angetrieben werden kann, wenn die Revolverscheibe in einer bestimmten Drehwinkellage festgelegt ist.

In weiterer Ausgestaltung der Erfindung kann die Schalteinrichtung für das schaltbare Zwischenrad eine doppelt wirkende Zylinder-Kolbeneinheit und eine mit dem Kolben verbundene Schaltgabel umfassen, die am Zwischenrad angreift, das auf einer dem koaxialen Zahnrad nachgeschalteten Zwischenwelle verschiebbar geführt ist.

Nach einer vorteilhaften Ausgestaltung der Erfindung weist das Getriebe ein auf der Motorwelle sitzendes Antriebsritzel und eine dem koaxialen Zahnrad vorgeschaltete Vorgelegewelle auf, auf der zwei Zahnräder drehfest angeordnet sind, von denen das erste mit dem Antriebsritzel und das zweite mit dem koaxialen Zahnrad kämmt, daß das erste Zahnrad einen weiteren Getriebezug antreibt, dessen letztes Zahnrad mit dem schaltbaren Zwischenrad in Eingriff bringbar ist. Diese Getriebegestaltung ermöglicht es, die Antriebswelle für Werkzeuge mit zwei unterschiedlichen Drehzahlen anzutreiben, wobei nach dem Lösen der Revolverwelle vom Getriebe das schaltbare Zwischenrad für die eine Antriebsdrehzahl mit dem koaxialen Zahnrad für die andere Antriebsdrehzahl mit dem letzten Rad des weiteren Getriebezuges in Eingriff gebracht wird, wobei der weitere Getriebezug selbstverständlicherweise so ausgelegt ist, daß ein anderes Übersetzungsverhältnis als beim Kraftfluß über das koaxiale Zahnrad vorliegt.

Um eine gedrängte Bauweise des Getriebes zu ermöglichen, ist es vorteilhaft, wenn in weiterer Ausgestaltung der Erfindung ein mit dem ersten Zahnrad der Vorgelegewelle kämmendes erstes Zahnrad des weiteren Getriebezuges auf einer Welle sitzt und daß auf der Welle auch das koaxiale Zahnrad angeordnet ist. Hierdurch wird nicht nur weniger Raum für das Getriebe benötigt, sondern auch eine weitere Lagerwelle für das erste Zahnrad des weiteren Getriebezuges eingespart. Das erste Zahnrad des weiteren Getriebezuges ist bei einer ersten Ausgestaltung frei drehbar auf der Welle gelagert.

Eine besonders vorteilhafte Ausgestaltung der Erfindung, die mehrere Geschwindigkeitsstufen für die Antriebswelle der Werkzeuge zuläßt, ergibt sich dadurch, daß die Zahnräder auf der Vorgelegewelle auf dieser mittels einer Schalteinrichtung gemeinsam verschiebbar sind, wobei in der ersten Endstellung das zweite Zahnrad mit dem koaxialen Zahnrad in Eingriff und das erste Zahnrad mit dem ersten Zahnrad des zweiten Getriebezuges außer Eingriff kommt, während in der zweiten Endstellung das erste Zahnrad der Vorgelegewelle mit dem ersten Zahnrad des zweiten Getriebezuges in Eingriff und das zweite Zahnrad der Vorgelegewelle mit dem koaxialen Zahnrad außer Eingriff kommt, wobei das koaxiale Zahnrad des ersten Getriebezuges mit dem ersten Zahnrad des weiteren Getriebezuges, mit dem das erste Zahnrad der Vorgelegewelle in Eingriff bringbar ist, drehfest verbunden ist. In Verbindung mit dem schaltbaren Zwischenrad lassen sich somit neben dem Verschwenken der Revolverscheibe vier Geschwindigkeitsstufen schalten. Die Größe der einzelnen Zahnräder der beiden parallelen Getriebezüge lassen sich dabei so auswählen, daß bei der ersten Geschwindigkeitsstufe mit der geringsten Antriebsdrehzahl das zweite Zahnrad der Vorgelegewelle mit dem koaxialen Zahnrad in Eingriff steht und das schaltbare Zwischenrad mit dem letzten Zahnrad des weiteren Getriebezuges kämmt. Bei der nächsthöheren Geschwindigkeitsstufe steht das zweite Zahnrad der Vorgelegewelle mit dem koaxialen Zahnrad in Eingriff, mit dem auch das schaltbare Zwischenrad kämmt. In der dritten Geschwindigkeitsstufe steht das erste Zahnrad der Vorgelegewelle mit dem ersten Zahnrad des weiteren Getriebezuges in Verbindung, wobei das schaltbare Zwischenrad mit dem letzten Zahnrad des weiteren Getriebezuges kämmt. Schließlich steht für die vierte Geschwindigkeitsstufe das erste Zahnrad der Vorgelegewelle mit dem ersten Zahnrad des weiteren Getriebezuges in Eingriff, während das schaltbare Zwischenrad mit dem koaxialen Zahnrad in Verbindung steht.

Da sich je nach Anzahl der Zahnräder in den beiden Getriebezügen unterschiedliche Drehrichtungen für die Antriebswelle ergeben können, ist es vorteilhaft, wenn in weiterer Ausgestaltung der Erfindung der Motor in seiner Drehrichtung umkehrbar ist.

Wenn in weiterer Ausgestaltung der Erfindung das Getriebe in einem gesonderten Getriebegehäuse am Revolvergehäuse lösbar befestigt ist, so ergibt sich die vorteilhafte Möglichkeit, dieses Getriebe zur Nachrüstung bestehender Werkzeugrevolver zu verwenden, um auch dort die Vorteile der Erfindung mit verhältnismäßig geringem Aufwand zu verwirklichen.

Wenn in weiterer Ausgestaltung der Erfindung mit der Revolverwelle ein Drehgeber verbunden ist, so ergibt sich der Vorteil, daß hierdurch die Drehwinkellage der Revolver scheibe ohne großen Regelaufwand für den Antriebsmotor einstellbar ist.

Wenn auch noch mit der Antriebswelle für die Werkzeuge ein Drehgeber verbunden ist, so lassen sich hierdurch erhebliche Vorteile bei der Bearbeitung der Werkstücke erzielen, da hierdurch die gegenseitige Lage von Werkzeug in bezug auf das Werkstück exakt einstellbar und wieder reproduzierbar ist.

Die Erfindung wird nachstehend anhand von in der Zeichnung dargestellten Ausführungsbeispielen näher erläutert. In der Zeichnung zeigen:
- Fig. 1:: einen Schnitt durch einen Werkzeugrevolver mit angeflanschtem Getriebe;
- Fig. 2:: eine Teilansicht des Werkzeugrevolvers in Richtung des Pfeiles II in Fig. 1;
- Fig. 3:: einen Teilschnitt nach der Linie III-III in Fig. 2; und
- Fig. 4 bis 8:: verschiedene Schaltstellungen eines Getriebes mit mehreren Geschwindigkeitsstufen.

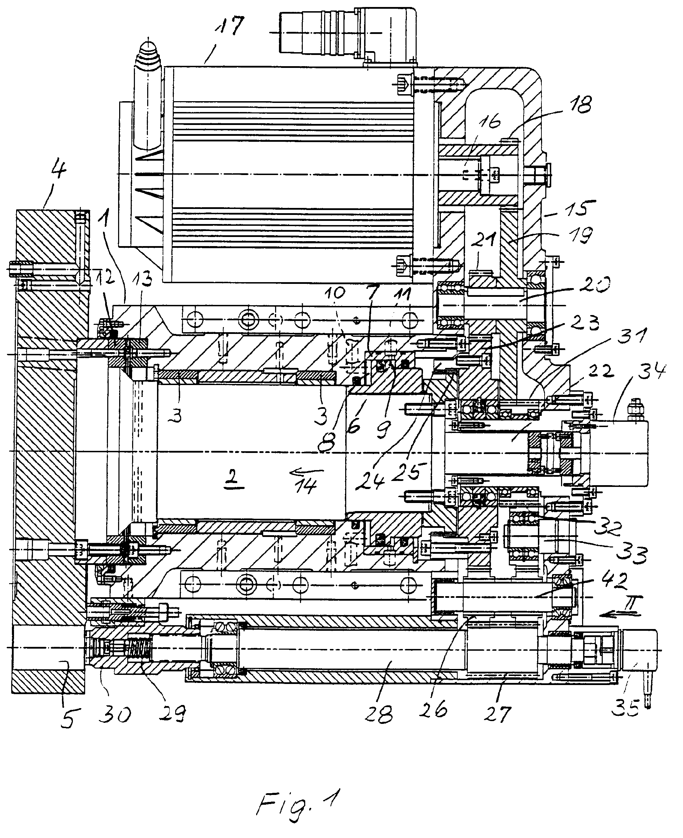

Wie aus Fig. 1 ersichtlich, ist in einem Revolvergehäuse eine Revolverwelle 2 in Lagern 3 drehbar und axial verschiebbar gelagert. An dem aus dem Revolvergehäuse herausragenden Ende der Revolverwelle 2 ist eine Revolverscheibe 4 befestigt, die mehrere auf den Umfang verteilte Aufnahmen 5 für antreibbare Werkzeuge aufweist.

Zur Axialverschiebung der Revolverwelle 2 ist auf dieser ein Kolben 6 befestigt, dessen zugeordneter Zylinder mit 7 bezeichnet ist. Der Kolben 6 ist als Stufenkolben ausgebildet und weist eine größere wirksame Fläche 8 und eine kleinere wirksame Fläche 9 auf, denen Druckmittel über Leitungen 10 und 11 zugeführt werden können.

An dem der Revolverscheibe 4 zugewandten Ende ist die Revolverwelle 2 mit einem Teil 12 einer Hirth-Kupplung 12, 13 verbunden, deren Gegenteil 13 am Revolvergehäuse 1 befestigt ist. In der dargestellten Lage befindet sich die Hirth-Kupplung in Eingriff, wodurch die Revolverscheibe 4 in einer bestimmten Drehwinkellage festgelegt ist. Um diese Stellung zu erreichen, wird über die Leitung 10 Druckmittel der größeren wirksamen Fläche 8 des Kolbens 6 zugeführt, so daß die Revolverwelle in die in Fig. 1 dargestellte Lage in axialer Richtung geschoben ist. Wird über die Leitung 11 Druckmittel der kleineren wirksamen Fläche 9 des Kolbens 6 zugeführt, so wird die Revolverwelle in Richtung des Pfeiles 14 aus der gezeichneten Lage verschoben, wodurch die beiden Teile 12 und 13 der Hirth-Kupplung voneinander frei kommen, so daß die Revolverwelle 2 mit der Revolverscheibe 4 in eine andere Drehwinkellage verschwenkt werden kann.

An dem der Revolverscheibe 4 abgewandten Seite des Revolvergehäuses 1 ist ein Getriebegehäuse 15 mittels Schrauben lösbar befestigt. In dieses Getriebegehäuse 1 ragt die Motorwelle 16 eines Antriebsmotors 17 hinein, der auf dem Revolvergehäuse 1 angeordnet ist. Die Antriebswelle 16 trägt ein Antriebsritzel 18, das mit einem ersten Zahnrad 19 kämmt, welches auf einer Vorgelegewelle 20 drehfest angeordnet ist, auf welcher ein zweites Zahnrad 21 ebenfalls drehfest aufgesetzt ist. Das zweite Zahnrad 21 der Vorgelegewelle 20 kämmt mit einem koaxial zur Revolverwelle 2 auf einer Welle 22 frei drehbar gelagerten Zahnrad 23. Dieses Zahnrad 23 ist an der dem Revolvergehäuse 1 zugewandten Seite mit einem Zahnrad 24 mit Innenverzahnung fest verbunden. Dieses Zahnrad 24 kann mit einem am Ende der Revolverwelle 2 befestigten Zahnrad 25 mit Außenverzahnung in Eingriff gebracht werden. In der dargestellten Lage gemäß Fig. 1 befinden sich diese beiden Zahnräder außer Eingriff. Wird die Revolverwelle 2 mittels des Kolbens 6 in Richtung des Pfeiles 14 verschoben, so greifen die Zahnräder 24 und 25 ineinander. Diese beiden Zahnräder bilden eine schaltbare Kupplung, die eine drehfeste Verbindung zwischen der Revolverwelle 2 und dem koaxialen Zahnrad 23 herstellen kann.

Das koaxiale Zahnrad 23 kann mit einem schaltbaren Zwischenrad 26 in Eingriff gebracht werden, welches in Richtung des Kraftflusses dem koaxialen Zahnrad 23 nachgeschaltet ist. Dieses Zwischenrad 26 steht mit einem Ritzel 27 einer Antriebswelle 28 in Eingriff. Die Antriebswelle 28 reicht bis zur Revolverscheibe 4 und ist an dem der Revolverscheibe 4 zugewandten Ende mit einem durch eine Feder 29 abgefederten Kupplungsstück 30 für den Antrieb von Werkzeugen ausgerüstet, die in der jeweiligen Aufnahme 5 eingesetzt sind. Die Drehwinkellagen der Revolverscheibe 4 werden so festgelegt, daß die Achse der Aufnahme 5 mit der Achse der Antriebswelle 28 exakt fluchtet, um ein Zusammenwirken der Kupplung 30 mit dem jeweiligen Werkzeug zu ermöglichen.

Das Getriebe weist auch noch einen weiteren Getriebezug auf, der im dargestellten Ausführungsbeispiel aus zwei Zahnrädern 31 und 32 besteht. Das Zahnrad 31 ist auf der Welle 22 frei drehbar gelagert und steht mit dem ersten Zahnrad 19 der Vorgelegewelle 20 in Eingriff. Dieses erste Zahnrad 31 des weiteren Getriebezuges steht mit dem zweiten bzw. letzten Zahnrad 32 dieses Getriebezuges in Verbindung. Dieses Zahnrad ist auf einem Achsstummel 33 in einer solchen Position gelagert, daß das schaltbare Zwischenrad 26 mit diesem letzten Zahnrad 32 des weiteren Getriebezuges in Verbindung gebracht werden kann. Diese Schaltstellung ist in Fig. 1 mit gestrichelten Linien angedeutet. Dabei ist das Ritzel 27 in axialer Richtung so breit ausgeführt, daß auch in dieser Schaltstellung des Zwischenrades 26 ein Eingriff mit dem Ritzel 27 verbleibt.

Zur genauen Feststellung der Drehwinkellage der Revolverscheibe 4 ist an dem der Revolverscheibe 4 abgewandten Ende der Revolverwelle 2 ein Drehgeber 34 angeordnet. Ein weiterer Drehgeber 35 sitzt an dem der Kupplung 30 abgewandten Ende der Antriebswelle 28, um die genaue Position des Werkzeuges feststellen zu können.

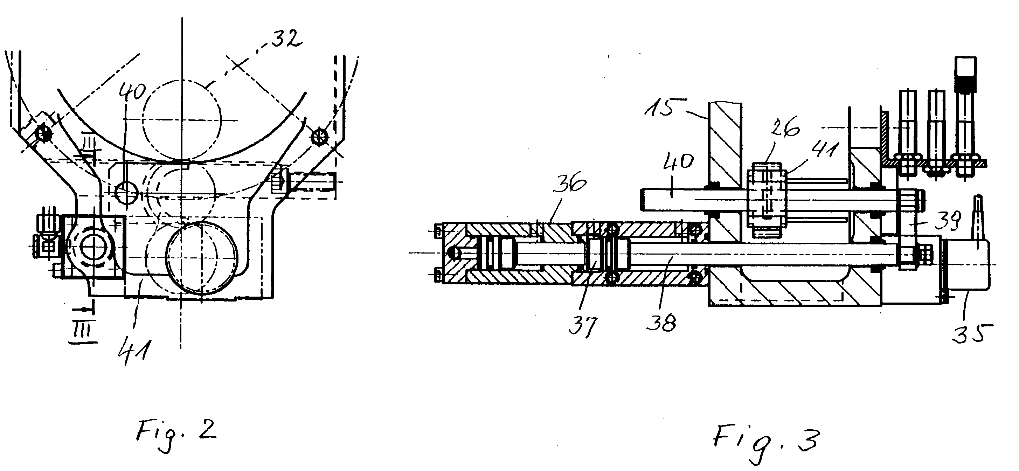

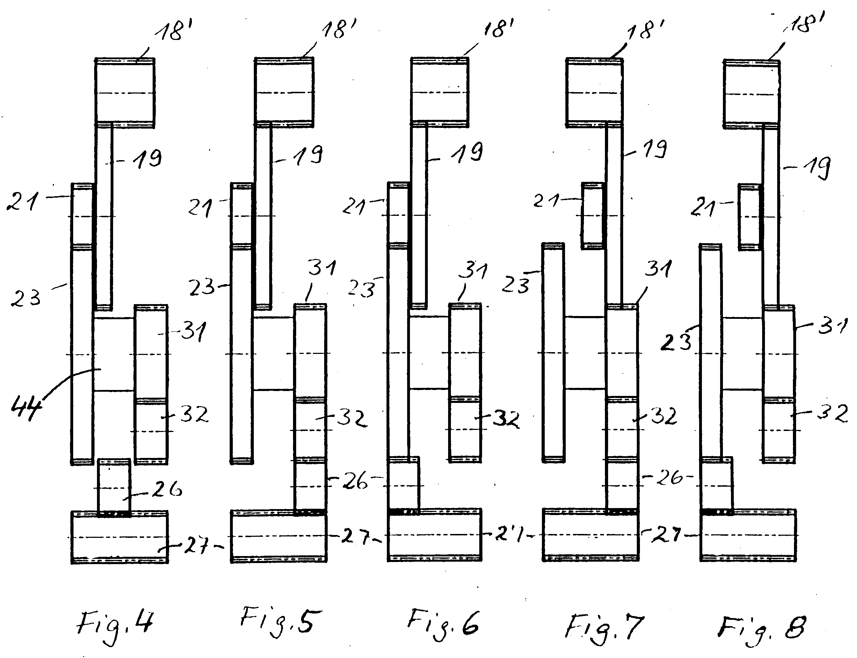

In den Fig. 2 und 3 ist der Schaltmechanismus für das schaltbare Zwischenrad 26 erkennbar. Dieser Schaltmechanismus umfaßt einen am Getriebegehäuse 15 befestigten Zylinder 36 mit einem doppelt wirkenden Kolben 37, dessen Kolbenstange 38 über eine starre Verbindungslasche 39 mit einer im Getriebegehäuse 15 verschiebbar geführten Schaltstange 40 fest verbunden ist. Auf dieser Schaltstange 40 ist eine Schaltgabel 41 befestigt, die mit dem schaltbaren Zwischenrad 26 zusammenwirkt und dieses bei Verschieben des Kolbens 37 in die verschiedenen Schaltstellungen auf einer Welle 42 verschiebt, die im Getriebegehäuse 15 drehbar gelagert ist und mit einem Keilprofil 43 versehen ist, das mit einem entsprechenden Keilprofil im Zwischenrad 26 zusammenwirkt, so daß dieses drehfest, jedoch verschiebbar auf der Welle 42 angeordnet ist.

Die Wirkungsweise der beschriebenen Anordnung ist folgende: Befindet sich die Revolverwelle 2 in der in Fig. 1 dargestellten Lage, so stehen die beiden Teile 12 und 13 der Hirth-Kupplung miteinander in Eingriff und die beiden Zahnräder 24 und 25 der schaltbaren Kupplung sind außer Eingriff. In dieser Stellung ist die Revolverscheibe 4 in ihrer eingestellten Drehwinkellage festgelegt. Treibt nun der Motor 17 mittels des Ritzels 18 das erste Zahnrad 19 der Vorgelegewelle 20 an, so wird aufgrund der drehfesten Verbindung beider Zahnräder 19, 21 mit der Vorgelegewelle 20 auch das zweite Zahnrad 21 angetrieben, welches mit dem auf der Welle 22 frei drehbar gelagerten Zahnrad 23 kämmt. Dieses Zahnrad 23 treibt nun in der in Fig. 1 dargestellten Lage des schaltbaren Zwischenrades 26 dieses an, welches mit dem Ritzel 27 auf der Antriebswelle 28 in Eingriff steht, so daß die Welle 28 angetrieben wird und somit ein in der Aufnahme 5 aufgenommenes Werkzeug antreiben kann. Wird das Zwischenrad 26 in die in Fig. 1 mit gestrichelten Linien dargestellte Schaltstellung gebracht, so erfolgt der Kraftfluß, ausgehend von dem Antriebsritzel 18 über das erste Zahnrad 19, das erste Zahnrad 31 des weiteren Getriebezuges zum letzten Zahnrad 32 dieses Getriebezuges, welches nach erfolgter Umschaltung des Zwischenrades 26 in die mit gestrichelten Linien gezeichnete Stellung mit diesem kämmt. In dieser Schaltstellung erhält die Antriebswelle eine wesentlich größere Drehzahl als in der vorher beschriebenen Schaltstellung, was sich aus der unterschiedlichen Größe der Zahnräder des weiteren Getriebezuges in bezug auf den ersten Getriebezug ergibt. Da das Zahnrad 19 größer als das Zahnrad 31 ist, ist dessen Drehzahl größer als diejenige des Zahnrades 19. Da das Zahnrad 31, welches mit dem Zahnrad 32 kämmt, größer als letzteres ist, wird die Drehzahl nochmals gesteigert. Bei dem ersten Getriebezug wird dagegen die Drehzahl der Vorgelegewelle 20 durch den Eingriff des zweiten Zahnrades 21 in das koaxiale Zahnrad 23, welches wesentlich größer als das zweite Zahnrad 21 ist, zunächst ins Langsame reduziert. Zwar wird diese Drehzahl durch den Eingriff des Zahnrades 23 in das schaltbare Zwischenrad 26, welches wesentlich kleiner als das Zahnrad 23 ist, wieder ins Schnelle übersetzt, doch ist diese Drehzahl geringer als beim Kraftfluß über den weiteren Getriebezug, der vorher erläutert wurde.

Wird die Revolverwelle 2 mittels des Kolbens 6 in Richtung des Pfeiles 14 in ihre zweite Endlage verschoben, so kommen die beiden Teile 12 und 13 der Hirth-Kupplung voneinander frei, wodurch die Revolverwelle 2 zusammen mit der Revolverscheibe 4 frei drehbar ist. In dieser Stellung greifen die Zahnräder 24 und 25, die eine schaltbare Kupplung bilden, ineinander. In dieser Schaltstellung läuft der Kraftfluß ausgehend von dem Antriebsritzel 18 über das erste Zahnrad 19 der Vorgelegewelle 20 und treibt diese an. Da das zweite Zahnrad 21 auf der Vorgelegewelle 20 drehfest sitzt, treibt es das koaxial zur Revolverwelle 2 angeordnete Zahnrad 23 an. Da dieses Zahnrad über die Zahnräder 24 und 25 mit der Revolverwelle 2 drehfest verbunden ist, wird diese und somit die Revolverscheibe 4 angetrieben. Da das Antriebsritzel 18 wesentlich kleiner als das erste Zahnrad 19 und das zweite Zahnrad 21 ebenfalls wesentlich kleiner als das koaxiale Zahnrad 23 ist, wird die Drehzahl der Motorwelle 16 sehr stark ins Langsame untersetzt, wodurch für das Verschwenken der Revolverscheibe 14 die gewünschte Drehgeschwindigkeit bei sehr hohem Drehmoment zur Verfügung steht. Bei diesem Vorgang muß das schaltbare Zwischenrad 26 in eine Zwischenstellung auf der Welle 42 gebracht werden und zwar zwischen das Zahnrad 23 und das Zahnrad 32, wodurch der Kraftfluß zur Antriebswelle 28 unterbrochen ist.

In den Fig. 4 bis 8 sind verschiedene Schaltstellungen eines gegenüber Fig. 1 abgeänderten Getriebes dargestellt. Dabei sind gleiche Teile mit den gleichen Bezugszeichen und vergleichbare Teile mit den gleichen Bezugszeichen, jedoch mit einem Strich versehen. Der wesentliche Unterschied zu dem Getriebe nach Fig. 1 besteht in zwei Punkten. Die erste Tatsache ist darin zu sehen, daß die Zahnräder 19 und 21 gemeinsam auf der Vorgelegewelle 20 verschiebbar sind, wobei das Antriebsritzel 18' in axialer Richtung so breit ausgeführt ist, vgl. Fig. 4 - 8, daß trotz der Verschiebemöglichkeit ein ständiger Eingriff zwischen dem Antriebsritzel 18' und dem ersten Zahnrad 19 verbleibt. Die beiden Endstellungen sind in den Fig. 4 bis 6 einerseits und den Fig. 7 und 8 andererseits dargestellt.

Der zweite Unterschied zu dem Getriebe gemäß Fig. 1 besteht darin, daß die Zahnräder 23 und 31 drehfest miteinander verbunden sind.

In der in Fig. 1 dargestellten Schaltstellung erfolgt der Kraftfluß ausgehend vom Antriebsritzel 18' über das erste Zahnrad 19, das drehfest mit diesem verbundene Zahnrad 21 auf das Zahnrad 23, welches in dieser Schaltstellung über die in Fig. 1 ersichtliche Kupplung 24, 25 mit der Revolverwelle 2 drehfest verbunden ist. Das schaltbare Zwischenrad 26 befindet sich zwischen den Zahnrädern 21 und 32, wodurch der Kraftfluß zum Ritzel 27 und damit zur Antriebswelle 28 unterbunden ist. Dies ist die Schaltstellung für das Verschwenken der Revolverscheibe 4.

Die Getriebeauslegung ist so gewählt, daß sich aus den unterschiedlichen Schaltstellungen ausgehend von den Fig. 5 bis zur Fig. 8 jeweils höhere Drehzahlen des Ritzels 27 und damit der mit ihm verbundenen Antriebswelle für die Werkzeuge ergeben.

In Fig. 5 ist diejenige Schaltstellung angezeigt, die die kleinste Drehzahl des Ritzels 27 ergibt. In dieser Schaltstellung ist das Zahnradpaar 19, 21 so verschoben, daß das Zahnrad 21 mit dem Zahnrad 23 kämmt. Der Kraftfluß verläuft dann weiter über das Zahnrad 31, welches mit dem Zahnrad 23 über ein Zwischenstück 44 drehfest verbunden ist, zum Zahnrad 32, welches mit dem Zwischenrad 26 kämmt, das ständig mit dem Ritzel 27 in Verbindung steht.

In der Schaltstellung gemäß Fig. 6, die sich von derjenigen nach Fig. 5 nur dadurch unterscheidet, daß das Zwischenrad 26 mit dem Zahnrad 23 kämmt, erfolgt der Kraftfluß ausgehend vom Antriebsritzel 18' über das Zahnradpaar 19, 21 zum Zahnrad 23 und von dort über das Zwischenrad 26 auf das Ritzel 27.

Die wiederum nächste Drehzahlstufe ergibt sich aus der Schaltstellung gemäß Fig. 7. In dieser Schaltstellung ist das Zahnradpaar 19, 21 in seine andere Endstellung verschoben, wodurch das Zahnrad 19 mit dem ersten Zahnrad 31 des weiteren Getriebezuges in Eingriff kommt. In der Schaltstellung gemäß Fig. 7 ist das Zwischenrad 26 mit dem letzten Zahnrad 32 des weiteren Getriebezuges in Eingriff gebracht, so daß der Kraftfluß ausgehend vom Antriebsritzel 18' über das erste Zahnrad 19 und die Zahnräder 31 und 32 des weiteren Getriebezuges zum Zwischenrad 26 und von dort zum Ritzel 27 verläuft.

Die Schaltstellung nach Fig. 8 ermöglicht die höchste Drehzahl. Hier befindet sich das Zahnradpaar 19, 21 in der gleichen Schaltstellung wie in Fig. 7, jedoch ist das Zwischenrad 26 in Eingriff mit dem Zahnrad 23 gebracht worden. Der Kraftfluß erfolgt nun ausgehend von dem Antriebsritzel 18' über das Zahnrad 19 auf das Zahnrad 31, welches aufgrund seiner drehfesten Verbindung mit dem Zahnrad 23 dieses ebenfalls in Umdrehung versetzt. Von dem Zahnrad 23 erfolgt dann der Kraftfluß auf das Zwischenrad 26 und von diesem auf das Ritzel 27.

## Patentansprüche

1. Werkzeugrevolver für Werkzeugmaschinen mit angetriebenen Werkzeugen, dessen Revolverscheibe (4) an einer im Revolvergehäuse (1) drehbar gelagerten Revolverwelle (2) angeordnet, in verschiedene Drehwinkellagen bringbar und festlegbar ist, in denen das jeweilige Werkzeug mit einer Antriebswelle gekuppelt ist, wobei am Revolvergehäuse (1) an der der Revolverscheibe (4) abgewandten Seite ein von einem Motor (17) antreibbares Getriebe vorgesehen ist, das ein koaxial zur Revolverwelle (2) drehbar gelagertes Zahnrad (23) aufweist, das einerseits mit der Revolverwelle (2) durch eine schaltbare Kupplung (24, 25) drehfest verbindbar ist und andererseits mittels eines nachgeordneten, das Werkzeug antreibenden Zwischenzahnrades (26) mit einem Ritzel (27) der Antriebswelle (28) für die Werkzeuge verbindbar ist, dadurch gekennzeichnet, daß für das Antreiben der Antriebswelle (28) mit unterschiedlichen Drehzahlen das Getriebe zwei parallel verlaufende vom Motor (17) ständig angetriebene Getriebezüge (21, 23; 31, 32) aufweist, daß das Zwischenzahnrad (26) schaltbar ist und daß die Antriebswelle (28) mittels des schaltbaren Zwischenzahnrades (26) wahlweise mit einem der Getriebezüge kuppelbar ist.

2. Werkzeugrevolver nach Anspruch 1, **dadurch gekennzeichnet,** daß die Revolverwelle (2) axial verschiebbar gelagert ist und mittels eines auf ihr befestigten doppelt wirkenden Kolbens (6) in zwei Endstellungen verschiebbar ist, daß an der aus Revolverwelle (2) und Revolverscheibe (4) bestehenden Einheit der eine Teil (12) einer Hirth-Kupplung (12, 13) fest angeordnet ist, deren anderer Teil (13) am Revolvergehäuse (1) befestigt ist, daß auf der Revolverwelle (2) ein Zahnrad (25) mit Außenverzahnung und ein dazu passendes Zahnrad (24) mit Innenverzahnung am koaxialen Zahnrad (23) befestigt ist, wobei das Zahnrad (25) auf der Revolverwelle und das Zahnrad (24) am koaxialen Zahnrad (23) die schaltbare Kupplung (24, 25) bilden, daß bei der axialen Verschiebung der Revolverwelle (2) in die erste Endstellung die beiden Zahnräder (24, 25) der schaltbaren Kupplung in Eingriff und die beiden Teile (12, 13) der Hirth-Kupplung außer Eingriff kommen und bei der Verschiebung in die zweite Endstellung die Zahnräder (24, 25) der schaltbaren Kupplung außer Eingriff und die Teile (12, 13) der Hirth-Kupplung in Eingriff kommen und daß das schaltbare Zwischenrad (26) durch eine Schalteinrichtung (36 bis 41) außer Eingriff mit dem koaxialen Zahnrad (23) bringbar ist, wenn sich die Revolverwelle (2) in der ersten Endstellung befindet und in Eingriff mit dem koaxialen Zahnrad (23) bringbar ist, wenn sich die Revolverwelle (2) in der zweiten Endstellung befindet.

3. Werkzeugrevolver nach Anspruch 2, **dadurch gekennzeichnet,** daß die Schalteinrichtung für das schaltbare Zwischenrad (26) eine doppelt wirkende Zylinder-Kolbeneinheit (36, 37) und eine mit dem Kolben (37) verbundene (38, 39, 40) Schaltgabel (41) umfaßt, die am Zwischenrad (26) angreift, das auf einer dem koaxialen Zahnrad (23) nachgeschalteten Zwischenwelle (42) verschiebbar geführt ist.

4. Werkzeugrevolver nach einem der Ansprüche 1 bis 3, **dadurch gekennzeichnet,** daß das Getriebe ein auf der Motorwelle (16) sitzendes Antriebsritzel (18) und eine dem koaxialen Zahnrad (23) vorgeschaltete Vorgelegewelle (20) aufweist, auf der zwei Zahnräder (19, 21) drehfest angeordnet sind, von denen das erste (19) mit dem Antriebsritzel (18) und das zweite (21) mit dem koaxialen Zahnrad (23) kämmt, daß das erste Zahnrad (19) den Getriebezug (31, 32) antreibt, dessen letztes Zahnrad (32) mit dem schaltbaren Zwischenrad (26) in Eingriff bringbar ist.

5. Werkzeugrevolver nach Anspruch 4, **dadurch gekennzeichnet,** daß ein mit dem ersten Zahnrad (19) der Vorgelegewelle (20) kämmendes erstes Zahnrad (31) des weiteren Getriebezuges (31, 32) auf einer Welle (22) sitzt und daß auf der Welle (22) auch das koaxiale Zahnrad (23) angeordnet ist.

6. Werkzeugrevolver nach Anspruch 5, **dadurch gekennzeichnet,** daß das erste Zahnrad (31) des weiteren Getriebezuges (31, 32) frei drehbar gelagert ist.

7. Werkzeugrevolver nach Anspruch 4 oder 5, **dadurch** **gekennzeichnet,** daß die Zahnräder (19, 21) auf der Vorgelegewelle (20) auf dieser mittels einer Schalteinrichtung gemeinsam verschiebbar sind, wobei in der ersten Endstellung das zweite Zahnrad (21) mit dem koaxialen Zahnrad (23) in Eingriff und das erste Zahnrad (19) der Vorgelegewelle (20) mit dem ersten Zahnrad (21) des Getriebezuges (31, 32) außer Eingriff kommt, während in der zweiten Endstellung das erste Zahnrad (19) der Vorgelegewelle (20) mit dem ersten Zahnrad (31) des Getriebezuges (31, 32) in Eingriff und das zweite Zahnrad (21) der Vorgelegewelle (20) mit dem koaxialen Zahnrad (20) außer Eingriff kommt, wobei das koaxiale Zahnrad (23) des ersten Getriebezuges mit dem ersten Zahnrad (31) des Getriebezuges (31, 32), mit dem das erste Zahnrad (19) der Vorgelegewelle (20) in Eingriff bringbar ist, drehfest miteinander verbunden ist.

8. Werkzeugrevolver nach einem der Ansprüche 1 bis 7, **dadurch gekennzeichnet,** daß der Motor (17) in seiner Drehrichtung umkehrbar ist.

9. Werkzeugrevolver nach einem der Ansprüche 1 bis 8, **dadurch gekennzeichnet,** daß das Getriebe in einem gesonderten Getriebegehäuse (15) am Revolvergehäuse (1) lösbar befestigt ist.

10. Werkzeugrevolver nach einem der Ansprüche 1 bis 9, **dadurch gekennzeichnet,** daß mit der Revolverwelle (2) ein Drehgeber (34) verbunden ist.

11. Werkzeugrevolver nach einem der Ansprüche 1 bis 10, **dadurch gekennzeichnet,** daß der Antriebswelle (28) für die Werkzeuge ein Drehgeber (35) verbunden ist.

## Claims

1. Tool turret for machine tools with driven tools, the turret disc (4) of which is arranged on a turret shaft (2) rotatably mounted in the turret housing (1) and can be brought into and fixed in different angular positions in which the respective tool is coupled to a drive shaft, a gear unit which can be driven by a motor (17) being provided on the turret housing (1) on the side remote from the turret disc (4) and having a rotatably mounted gear (23) coaxial with the turret shaft (2) which, on the one hand, can be rigidly connected to the turret shaft (2) by an indexable clutch (24, 25) and, on the other hand, can be connected by means of a subsequent intermediate gear (26) driving the tool to a pinion (27) of the drive shaft (28) for the tools, characterised in that, for driving the drive shaft (28) at different speeds, the gear unit has two parallel gear trains (21, 23; 31, 32) driven continuously by the motor (17), that the intermediate gear (26) is indexable and that the drive shaft (28) can be coupled alternately to one of the gear trains by means of the indexable intermediate gear (26).

2. Tool turret according to claim 1, characterised in that the turret shaft (2) is mounted in an axially displaceable manner and can be moved into two end positions by means of a double-acting piston (6) fixed thereto, that one part (12) of a Hirth-type clutch (12, 13) is fixedly arranged on the unit consisting of the turret shaft (2) and the turret disc (4), the other part (13) of which is fixed to the turret housing (1), that a gear (25) with external toothing is fixed to the turret shaft (2) and a mating gear (24) with internal toothing is fixed to the coaxial gear (23), the gear (25) on the turret shaft and the gear (24) on the coaxial gear (23) forming the indexable clutch (24, 25), that, upon axial movement of the turret shaft (2) into the first end position, the two gears (24, 25) of the indexable clutch engage and the two parts (12, 13) of the Hirth-type clutch disengage and, upon movement into the second end position, the gears (24, 25) of the indexable clutch disengage and the parts (12, 13) of the Hirth-type clutch engage and that the indexable intermediate gear (26) can be disengaged from the coaxial gear (23) by an indexing device (36 to 41) when the turret shaft (2) is situated in the first end position and can be brought into engagement with the coaxial gear (23) when the turret shaft (2) is situated in the second end position.

3. Tool turret according to claim 2, characterised in that the indexing device for the indexable intermediate gear (26) includes a double-acting cylinder/piston unit (36, 37) and a selector fork (41) which is connected (38, 39 40) to the piston (37) and engages the intermediate gear (26) which is displaceably guided on an intermediate shaft (42) following the coaxial gear (23).

4. Tool turret according to one of claims 1 to 3, characterised in that the gear unit has a drive pinion (18) situated on the motor shaft (16) and an intermediate shaft (20) in front of the coaxial gear (23) on which two gears (19, 21) are non-rotatably arranged, the first (19) of which meshes with the drive pinion (18) and the second (21) of which meshes with the coaxial gear (23), and that the first gear (19) drives the gear train (31, 32), the final gear (32) of which can be brought into engagement with the indexable intermediate gear (26).

5. Tool turret according to claim 4, characterised in that a first gear (31) of the further gear train (31, 32) meshing with the first gear (19) of the intermediate shaft (20) is situated on a shaft (22) and that the coaxial gear (23) is also arranged on the shaft (22).

6. Tool turret according to claim 5, characterised in that the first gear (31) of the further gear train (31, 32) is mounted so that it is freely rotatable.

7. Tool turret according to claim 4 or claim 5, characterised in that the gear teeth (19, 21) on the intermediate shaft (20) are displaceable together on the latter by means of an indexing device, wherein, in the first end position, the second gear (21) engages with the coaxial gear (23) and the first gear (19) of the intermediate shaft (20) disengages from the first gear (21) of the gear train (31, 32), while, in the second end position, the first gear (19) of the intermediate shaft (20) engages with the first gear (31) of the gear train (31, 32) and the second gear (21) of the intermediate shaft (20) disengages from the coaxial gear (23), the coaxial gear (23) of the first gear train and the first gear (31) of the gear train (31, 32) with which the first gear (19) of the intermediate shaft (20) can be brought into engagement being non-rotatably connected to one another.

8. Tool turret according to one of claims 1 to 7, characterised in that the direction of rotation of the motor (17) can be reversed.

9. Tool turret according to one of claims 1 to 8, characterised in that the gear unit is removably fixed to the turret housing (1) in a separate gear housing (15).

10. Tool turret according to one of claims 1 to 9, characterised in that a synchro-generator (34) is connected to the turret shaft (2).

11. Tool turret according to one of claims 1 to 10, characterised in that a synchro-generator (35) is connected to the drive shaft (28) for the tools.

## Revendications

1. Revolver porte-outil pour machines-outils comportant des outils entraînés, dont le plateau de revolver (4), disposé sur un arbre de revolver (2) logé en rotation dans le carter de revolver (1), peut être tourné et bloqué dans différentes positions angulaires dans lesquelles l'outil respectif est couplé à un arbre d'entraînement, un réducteur pouvant être entraîné par un moteur (17) étant prévu sur le côté du carter de revolver (1) opposé au plateau de revolver (4), lequel comporte une roue dentée (23) logée en rotation et coaxiale à l'arbre de revolver (2) qui peut être reliée de façon fixe à l'arbre de revolver (2) par un accouplement embrayable (24, 25) d'une part, et qui, d'autre part, peut être reliée à un pignon (27) de l'arbre d'entraînement (28) des outils au moyen d'une roue dentée intermédiaire (26) entraînant l'outil disposé en aval, caractérisé en ce que, pour entraîner l'arbre d'entraînement (28) à des vitesses de rotation variables, le réducteur comporte deux trains d'engrenages (21, 23 ; 31, 32) parallèles au moteur (17) entraînés en permanence, en ce que la roue dentée intermédiaire (26) est embrayable, et en ce que l'arbre d'entraînement (28) peut être, au choix, couplé à l'un des trains d'engrenages au moyen de la roue dentée intermédiaire embrayable (26).

2. Revolver porte-outil selon la revendication 1, caractérisé en ce que l'arbre de revolver (2) est logé de façon à pouvoir se déporter axialement et peut être placé dans deux positions extrêmes au moyen d'un piston (6) à double effet qui est fixé sur lui, en ce qu'une partie (12) d'un accouplement de Hirth (12, 13) est fixée sur l'unité constituée de l'arbre de revolver (2) et du plateau de revolver (4), dont l'autre partie (13) est fixée sur le carter de revolver (1), en ce qu'une roue dentée (25) à denture extérieure est fixée sur l'arbre de revolver (2) et une roue dentée (24) correspondante à denture intérieure est fixée sur la roue dentée coaxiale (23), étant précisé que la roue dentée (25) sur l'arbre de revolver et la roue dentée (24) sur la roue dentée coaxiale (23) constituent l'accouplement embrayable (24, 25), en ce que, lors du déport axial de l'arbre de revolver (2) dans la première position extrême, les deux roues dentées (24, 25) de l'accouplement embrayable sont mises en prise et les deux parties (12, 13) de l'accouplement de Hirth sont désaccouplées, et en ce que, lors du déport dans la deuxième position extrême, les roues dentées (24, 25) de l'accouplement embrayable sont désaccouplées et les parties (12, 13) de l'accouplement de Hirth sont accouplées, et, en ce que la roue intermédiaire embrayable (26) peut être désaccouplée de la roue dentée coaxiale (23) par un dispositif d'embrayage (36 à 41) lorsque l'arbre de revolver (2) se trouve dans la première position extrême, et peut être mise en prise avec la roue dentée coaxiale (23) lorsque l'arbre de revolver (2) se trouve dans la deuxième position extrême.

3. Revolver porte-outil selon la revendication 2, caractérisé en ce que le dispositif d'embrayage pour la roue intermédiaire embrayable (26) comprend une unité cylindre-piston (36, 37) à double effet et (38, 39, 40) une fourche d'embrayage (41) reliée au piston (37) qui engrène la roue intermédiaire (26), laquelle est guidée et peut se déplacer sur un arbre intermédiaire (42) placé en aval de la roue dentée coaxiale (23).

4. Revolver porte-outil selon l'une quelconque des revendications 1 à 3, caractérisé en ce que le réducteur comporte un pignon d'entraînement (18) fixé sur l'arbre moteur (16) et un arbre intermédiaire (20) placé en amont de la roue dentée coaxiale (23), sur lequel deux roues dentées (19, 21) sont disposées de façon fixe, dont la première (19) engrène avec le pignon d'entraînement (18) et la deuxième (21) engrène avec la roue dentée coaxiale (23), et en ce que la première roue dentée (19) entraîne le train d'engrenages (31, 32) dont la dernière roue dentée (32) peut être mise en prise avec la roue intermédiaire embrayable (26).

5. Revolver porte-outil selon la revendication 4, caractérisé en ce qu'une première roue dentée (31) de l'autre train d'engrenages (31, 32) engrènant avec la première roue dentée (19) de l'arbre intermédiaire (20) est fixée sur un arbre (22), et en ce que la roue dentée coaxiale (23) est également disposée sur l'arbre (22).

6. Revolver porte-outil selon la revendication 5, caractérisé en ce que la première roue dentée (31) de l'autre train d'engrenages (31, 32) est logée en rotation libre.

7. Revolver porte-outil selon l'une des revendications 4 ou 5, caractérisé en ce que les roues dentées (19, 21) se trouvant sur l'arbre intermédiaire (20) sont déplaçables ensemble sur ce dernier au moyen d'un dispositif d'embrayage, étant précisé que dans la première position extrême, la deuxième roue dentée (21) est mise en prise avec la roue dentée coaxiale (23) et la première roue dentée (19) de l'arbre intermédiaire (20) est désaccouplée de la première roue dentée (21) du train d'engrenages (31, 32), tandis que dans la deuxième position extrême la première roue dentée (19) de l'arbre intermédiaire (20) est mise en prise avec la première roue dentée (31) du train d'engrenages (31, 32) et la deuxième roue dentée (21) de l'arbre intermédiaire (20) est désaccouplée de la roue dentée coaxiale (20), étant précisé que la roue dentée coaxiale (23) du premier train d'engrenages est reliée de façon fixe à la première roue dentée (31) du train d'engrenages (31, 32), avec laquelle la première roue dentée (19) de l'arbre intermédiaire (20) peut être mise en prise.

8. Revolver porte-outil selon l'une quelconque des revendications 1 à 7, caractérisé en ce que le sens de rotation du motor (17) peut être inversé.

9. Revolver porte-outil selon l'une quelconque des revendications 1 à 8, caractérisé en ce que le réducteur est fixé de manière amovible sur le carter de revolver (1) dans un carter de réducteur séparé (15).

10. Revolver porte-outil selon l'une quelconque des revendications 1 à 9, caractérisé en ce qu'un capteur de rotation (34) est relié à l'arbre de revolver (2).

11. Revolver porte-outil selon l'une quelconque des revendications 1 à 10, caractérisé en ce qu'un capteur de rotation (35) est relié à l'arbre d'entraînement (28) des outils.
